**Europäisches Patentamt**

**European Patent Office**

**Office européen des brevets**

(19)

(11) Veröffentlichungsnummer: **0 232 700 B1**

## EUROPÄISCHE PATENTSCHRIFT

(12)

(45) Veröffentlichungstag der Patentschrift: **04.12.91**

(51) Int. Cl.⁵: **C05F 9/02**

(21) Anmeldenummer: **87100039.4**

(22) Anmeldetag: **03.01.87**

(54) **Anlage zur Herstellung von Kompost aus organischen Abfallstoffen.**

(30) Priorität: **12.02.86 CH 565/86**

(43) Veröffentlichungstag der Anmeldung:
**19.08.87 Patentblatt 87/34**

(45) Bekanntmachung des Hinweises auf die
Patenterteilung:
**04.12.91 Patentblatt 91/49**

(84) Benannte Vertragsstaaten:
**AT BE DE FR GB NL SE**

(56) Entgegenhaltungen:
**EP-A- 0 145 874**
**WO-A-86/01197**
**DE-B- 1 592 782**
**DE-B- 2 636 535**

(73) Patentinhaber: **Compag Gesellschaft für Entsorgung organischer Abfälle**
**Moosgartenstrasse 620**
**CH-9202 Gossau(CH)**

(72) Erfinder: **Graf, Heinz**
**Bifangstrasse 1**
**CH-9323 Steinach(CH)**

(74) Vertreter: **Römpler, Aldo et al**
**Patentanwälte Georg Römpler und Aldo**
**Römpler Schützengasse 34 Postfach 148**
**CH-9410 Heiden(CH)**

EP 0 232 700 B1

## Beschreibung

Die Erfindung betrifft eine Anlage zur Herstellung von Kompost aus organischen Abfallstoffen mit einem die Abfallstoffe aufzunehmen bestimmten Silo in welchem mindestens ein annähernd senkrecht stehendes Mischwerkzeug angeordnet ist, welches mit seinem freien Ende bis in die Nähe des Silobodens reicht und über die Grundfläche des Silos verfahrbar ist, wodurch annähernd der ganze Innenraum des Silos für das Mischwerkzeug erreichbar wird, um bei mit Abfallstoffen gefülltem Silo, die übereinanderliegenden Schichten untereinander zu vermischen.

Es sind verschiedene Kompostierungsanlagen gemäss dem Oberbegriff des Patentanspruchs bekannt, beispielsweise aus EP - A2 - 0 145 874 und aus WO - A1 - 86/01 197. Hierbei dienen die Mischwerkzeuge nicht nur dem Mischen sondern auch dazu, den Abfall von der einen Seite des Silos zur entgegengesetzten Seite zu schieben, wo dieser dann als Kompost entnommen werden kann.

Aus DE - B2 - 2 636 535 geht darüberhinaus eine Anlage hervor, welche ein Förderband aufweist, mittels dem der Kompost auf der Oberseite des Silos entnommen und aus diesem herausbefördert wird.

In DE- B2 - 1 592 782 wird schliesslich ein Silo beschrieben, welcher ein waagerechtes Band als Boden aufweist. Dieses Band arbeitet als Förderband und befördert den ganzen zu kompostierenden Abfall von der einen Seite des Silos, d.h. von der Einwurfseite, bis zur am anderen Ende des Silos befindlichen Auswurfseite. Der Abfall durchläuft dabei den ungefähr 35 m langen, 3,50 m hohen und 3,30 m breiten Silo innerhalb von 120 Stunden.

Der in den bekannten Anlagen vorgesehene Transport des Abfalls von der einen Seite des Silos zur entgegengesetzten Seite, ist technisch aufwendig und verbraucht viel Energie.

Die vorliegende Erfindung bezweckt eine Anlage zur Herstellung von Kompost aus organischen Abfallstoffen zu schaffen, die im wesentlichen mit bekannten auf dem Markt erhältlichen Mitteln, d.h. kostengünstig hergestellt werden kann, leicht zu warten ist und einen hochwertigen Kompost ergibt.

Diese Aufgabe ist erfindungsgemäss gelöst, durch eine Kratz-Vorrichtung, die unter den Abfallstoffen horizontal auf dem Boden des Silos angeordnet ist und durch die jeweils die unterste Kompost-Schicht wegkratzbar und durch mindestens eine Öffnung in der Silo-Seitenwand nach aussen führbar ist, so dass die zu kompostierenden Abfallstoffe oben in den Silo einfüllbar und unten der fertige Kompost entfernbar ist, wobei die Kratz-Vorrichtung aus mindestens einem entlang dem Boden des Silos hin- und herbewegbaren Schieber besteht, der mit einer Mehrzahl von Kratzern mit keilförmigem Querschnitt besetzt ist, wobei die Schneiden der Kratzer entgegen der Förderrichtung des Kompostes liegen.

Nachfolgend wird anhand von drei Zeichnungsfiguren ein Ausführungsbeispiel der erfindungsgemässen Anlage beschrieben.

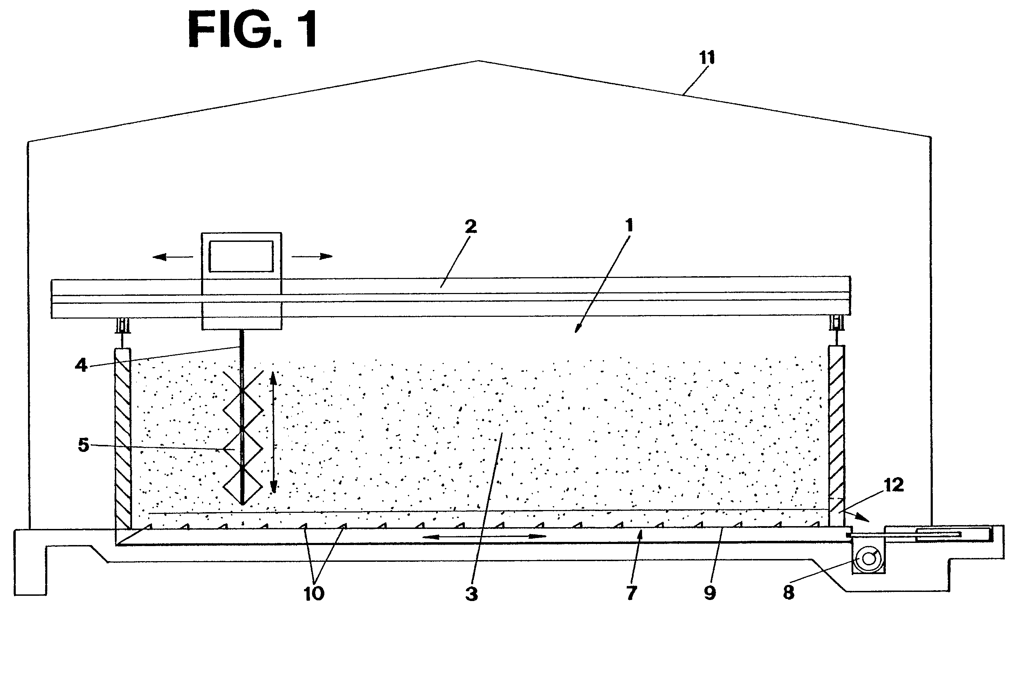

Fig. 1    zeigt eine Ansicht der Anlage,

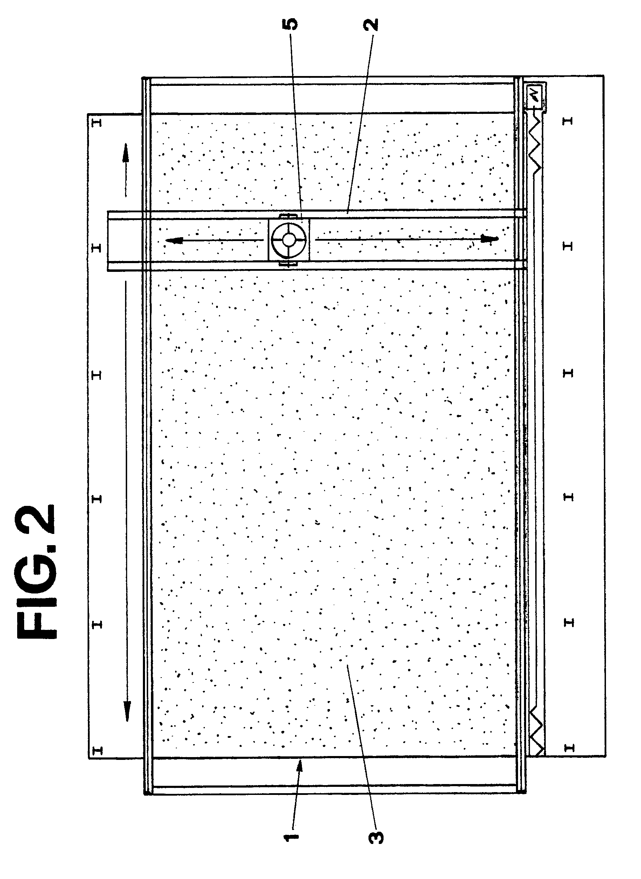

Fig. 2    zeigt eine Draufsicht der Anlage, und

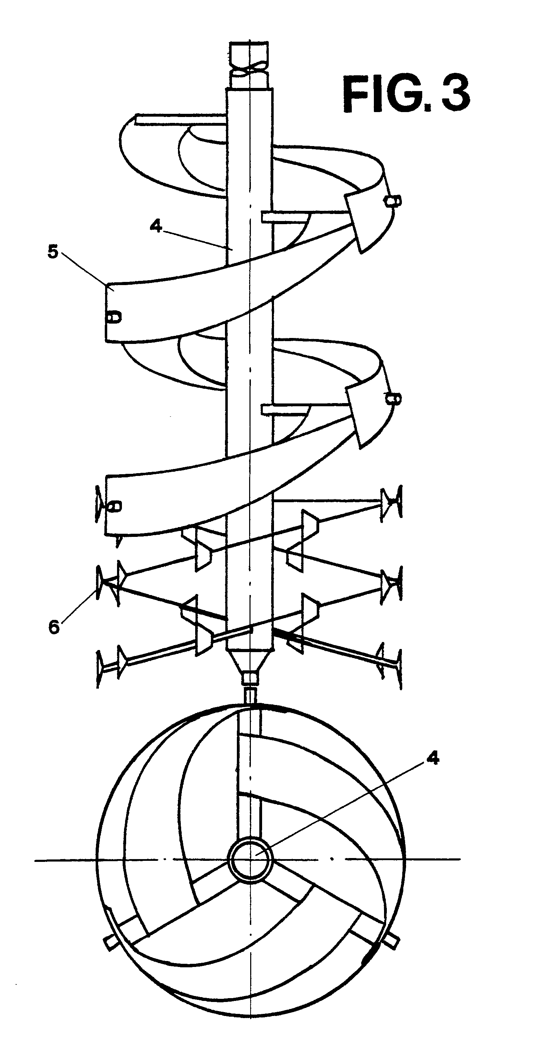

Fig. 3    zeigt das Mischwerkzeug.

In ein rechteckiges Silo 1 wird der zerkleinerte organische Haushaltabfall 3 eingebracht. Zur Zerkleinerung des Abfalls eignet sich das Schredder-Verfahren, welches eindeutig besseren Humus ergibt, als das Schneide- bzw. Häxlerverfahren.

An der Brücke 2 eines entlang des Silos 1 verfahrbaren Laufkrans ist ein mit seinem freien Ende bis in die Nähe des Silobodens reichendes Mischwerkzeug 5 angebracht. Dieses Mischwerkzeug 5 ist an der Brücke 2 quer zum Silo 1 verfahrbar. An seinem freien Ende ist das Mischwerkzeug 5 zu einem Bohrteil 6 ausgebildet. Der obere Teil des Mischwerkzeugs 5 ist eine förderschneckenartige Mischschnecke, die um ihre Achse 4 drehbar ist. Annähernd der ganze Innenraum des Silos 1 ist für das annähernd senkrecht stehende Mischwerkzeug 5 erreichbar. Die Bewegung des Mischwerkzeugs wird durch elektrische Steuermittel so gesteuert, dass dieses sich in einer vorbestimmten Zeit durch annähernd den ganzen Innenraum des Silos 1 bewegt. Das Mischwerkzeug 5 bewirkt eine Vermischung der übereinanderliegenden Schichten des Abfalls 3 und führt zugleich zu dessen Belüftung, was die biologische Verrottung desselben intensiviert. Damit bei Bedarf nur die oberen Schichten im Silo 1 bearbeitet werden können, ist das Mischwerkzeug zweckmässig in vertikaler Richtung hin- und herverschiebbar.

Unter dem Abfall 3 ist eine automatisch arbeitende Kratz-Vorrichtung 7 horizontal auf dem Boden des Silos 1 angeordnet. Diese Kratz-Vorrichtung 7 besteht aus mindestens einem auf dem Boden des Silos 1 hin- und herbewegbaren Schieber 9, der mit einer Mehrzahl von Kratzern 10 mit keilförmigem Querschnitt besetzt ist. Die Schneiden der Kratzer 10 liegen entgegen der Förderrichtung des Kompostes. Durch die Bewegung des Schiebers 9 wird die unterste Kompostschicht weggekratzt und durch eine Öffnung 12 in der Silo-Seitenwand in eine ausserhalb des Silos 1 angeordnete Sammelschnecke 8 geführt.

Zum Schutz gegen Witterungseinflüsse und gegebenenfalls auch zur Verringerung von Geruchsimmissionen ist es vorteilhaft, wenn die Anlage von einem Dach 11 bedeckt ist oder in einer Halle steht.

Der Silo 1 hat vorteilhaft eine Wandhöhe von 2,5 m und eine Breite von 10 m. Die Länge kann dann nach Bedarf frei gewählt werden. Selbstverständlich ist auch ein Silo denkbar, der breiter und höher ist. Bei einem Silo mit einer Wandhöhe von beispielsweise 4 m müsste aber für eine zusätzliche Belüftung des Siloinhaltes gesorgt werden.

Die vorbeschriebene Anlage gewährleistet bei grösstmöglicher Automatisierung und Raumausnutzung und unter Vermeidung von künstlichen Behelfsmitteln wie Kompostierstoffen die Umwandlung von organischen Abfallstoffen in hochwertigen Kompost.

Die Investitionskosten sind verhältnismässig niedrig und die Anlage ist wartungsarm und betriebssicher. Für allfällige Reparaturarbeiten sind die Antriebsteile ausserhalb des Silos leicht zugänglich. Bei Bedarf kann die Anlage durch Verlängerung des Silos mühelos erweitert werden.

## Patentansprüche

1. Anlage zur Herstellung von Kompost aus organischen Abfallstoffen mit einem die Abfallstoffe aufzunehmen bestimmten Silo (1) in welchem mindestens ein annähernd senkrecht stehendes Mischwerkzeug (5) angeordnet ist, welches mit seinem freien Ende bis in die Nähe des Silobodens reicht und über die Grundfläche des Silos (1) verfahrbar ist, wodurch annähernd der ganze Innenraum des Silos (1) für das Mischwerkzeug (5) erreichbar wird, um bei mit Abfallstoffen gefülltem Silo (1), die übereinanderliegenden Schichten untereinander zu vermischen, **gekennzeichnet durch** eine Kratz-Vorrichtung (7), die unter den Abfallstoffen horizontal auf dem Boden des Silos (1) angeordnet ist und durch die jeweils die unterste Kompost-Schicht wegkratzbar und durch mindestens eine Öffnung (12) in der Silo-Seitenwand nach aussen führbar ist, so dass die zu kompostierenden Abfallstoffe oben in den Silo (1) einfüllbar und unten der fertige Kompost entfernbar ist, wobei die Kratz-Vorrichtung (7) aus mindestens einem entlang dem Boden des Silos (1) hin- und herbewegbaren Schieber (9) besteht, der mit einer Mehrzahl von Kratzern (10) mit keilförmigem Querschnitt besetzt ist, wobei die Schneiden der Kratzer (10) entgegen der Förderrichtung des Kompostes liegen.

## Claims

1. Apparatus for the production of compost from organic waste with a silo (1) to receive the waste, in said silo there being arranged at least one approximately vertical mixer (5), said mixer extending with its free end down to near the bottom of the silo (1) and being movable over the base area of the silo (1), whereby approximately the entire internal volume of the silo (1) may be reached, so that when the silo (1) is filled with waste the vertically stratified layers may be thereby intermixed,

**characterized by** a scraper device (7) situated below the waste horizontally on the bottom of the silo (1) and allowing the bottommost compost layer to be scraped off and transported to the outside through at least one opening (12) in the side wall of the silo (1), so that the waste to be composted may be filled into the silo (1) at the top and the completed compost removed at the bottom, whereby the scraper device (7) comprises at least one slider (9), said slider being movable back and forth along the base of the silo (1) and being equipped with a plurality of scrapers (10) having a wedge-shaped cross-section, whereby the blades of the scrapers (10) lie in the opposite direction to the direction of conveyance of the compost.

## Revendications

1. Installation de production de compost à partir de déchets organiques, avec un silo (1) destiné à recueillir les déchets, dans lequel est disposé au moins un mélangeur (5) à peu près vertical, dont l'extrémité libre va jusqu'à proximité du fond du silo, et qui peut se déplacer sur la surface de base du silo (1), presque tout l'espace intérieur du silo (1) pouvant être atteint par le mélangeur (5) pour mélanger les couches superposées se trouvant dans le silo (1) rempli de déchets, **caractérisé par** un dispositif de raclage (7), disposé horizontalement au-dessous des déchets, sur le sol du silo (1), et qui permet de racler toujours la couche la plus basse du compost, qui peut être conduite vers l'extérieur à travers au moins une ouverture (12) située dans la paroi latérale du silo, de manière que les déchets à composter puissent être introduits par le haut du silo (1) et que le compost fini puisse être retiré par le bas, le dispositif de raclage (7) étant composé d'au moins un tiroir (9) pouvant être déplacé avec un mouvement de va-et-vient le long du fond du silo (1), qui est occupé par plusieurs racloirs (10) à profil cunéiforme, les lames des racleurs (10) étant dirigées dans la direction d'extraction du compost.

**FIG. 1**

EP 0 232 700 B1

FIG.2

FIG.3